# EUROPÄISCHE PATENTSCHRIFT

(11) **EP 0 528 115 B1**
(45) Veröffentlichungstag und Bekanntmachung des Hinweises auf die Patenterteilung: **30.03.1994**
(21) Anmeldenummer: 92108374.7
(22) Anmeldetag: 18.05.1992
(51) Int. Cl.: H02K 15/06

(54) **Vorrichtung zum Formen von in ein Stator- oder Rotorblechpaket eingezogenen Spulen**
Forming device for bobbins placed in stacks of sheets of stators or rotors
Dispositif pour former des bobines placées dans des paquets de tôles de stators ou rotors

(30) Priorität: 13.08.1991 DE 4126655
(43) Veröffentlichungstag der Anmeldung: 24.02.1993
(73) Patentinhaber: STATOMAT SPEZIALMASCHINEN GMBH, D-61138 Niederdorfelden (DE)
(72) Erfinder: Hensel, Edgar, W-6472 Altenstadt (DE); Nasterlack, Joachim, W-6350 Bad Nauheim (DE); Gassner, Edmund, W-6369 Nidderau 1 (DE); Albert, Gerhard, W-6369 Niederdorfelden (DE)
(74) Vertreter: Jochem, Bernd, Dipl.-Wirtsch.-Ing.

(56) Entgegenhaltungen:
- EP-A- 0 052 852
- EP-A- 0 226 550
- US-A- 2 873 514
- US-A- 2 873 515
- US-A- 4 106 189
- PATENT ABSTRACTS OF JAPAN vol. 5, no. 186 (E-84)(858) 25. November 1981
- PATENT ABSTRACTS OF JAPAN vol. 011, no. 237 (E-528)4. August 1987

## Beschreibung

Die Erfindung betrifft eine Vorrichtung zum Formen von in radial innen offene Nuten eines Stator- oder Rotorblechpakets einer elektrischen Maschine eingezogenen Spulen, bestehend aus einer Halterung zur Einspannung des Stator- oder Rotorblechpakets und einem koaxial zu dessen Mittellängsachse angeordneten, in die Stator- oder Rotorbohrung einführbaren Formdorn mit einer Vielzahl von radial in die Nuten vorschiebbaren Lamellen.

Derartige Vorrichtungen sind z. B. in der US-A-4,106,189, der japanischen Patentschrift 54-43 161 und der japanischen Patentanmeldungs-Veröffentlichungsschrift 62-48 240 beschrieben. Sie dienen dazu, in bestimmten Nuten eines Stator- oder Rotorblechpakets die eingezogenen Spulen radial nach außen zurückzudrängen, um noch eine weitere Spulenlage oder die Spulen einer Hilfsphase einziehen und ggf. Isolationsstreifen in die Nut einschieben zu können. Man spricht in diesem Zusammenhang von Freiformen bzw. Zwischenformen.

Die bisher bekannten Vorrichtungen zum Formen der Spulen in den Stator- oder Rotornuten haben den Mangel, daß sie jeweils nur für ein ganz bestimmtes Wickelschema eines bestimmten Stators oder eines Rotors mit radial innen offenen Nuten geeignet sind. Vielfach werden jedoch mit demselben Blechschnitt für den Stator z. B. vierpolige und zweipolige Motoren hergestellt. In solchen Fällen braucht man bisher selbst bei gleichen Maßen des Statorblechpakets für jeden Motortyp, d. h. für jedes Wickelschema, eine besondere Formvorrichtung. Die verschiedenen Formvorrichtungen unterscheiden sich im wesentlichen nur dadurch, daß in jeweils einer anderen Verteilung über den Umfang Lamellen radial ausfahren, um in den ihnen zugeordneten Nuten die Spulenstränge radial nach außen zu verdrängen, d. h. zu formen. Anzustreben ist dabei, daß die Lamellen eine ganz bestimmte Bewegung bis in eine vorbestimmte Endstellung ausführen. Dies ist nicht der Fall, wenn sämtliche Lamellen gemäß US-A-4,106,189 mit gleichmäßigem Druck radial vorgeschoben werden, weil sie dann je nach der zufallsbedingt unterschiedlichen Lage der Spulendrähte in den Nuten unterschiedliche Endstellungen erreichen können.

Der Erfindung liegt die Aufgabe zugrunde, eine Formvorrichtung der eingangs bezeichneten Art zu schaffen, mittels welcher die Spulen in Stator- oder Rotorblechpaketen mit unterschiedlichem Wickelschema geformt werden können.

Vorstehende Aufgabe wird erfindungsgemäß dadurch gelöst, daß selektiv mehrere unterschiedliche Gruppen von Lamellen radial vorschiebbar sind. Dies bedeutet, daß der Anwender für jedes in Frage kommende Wickelschema eine Gruppe von über den Umfang verteilten Lamellen bestimmen kann, die beim Formvorgang radial ausgefahren werden, während die jeweils nicht ausgewählten Lamellen nicht aktiviert werden.

Um mal die eine Gruppe von Lamellen und danach eine andere Gruppe - zu den Gruppen können teilweise dieselben Lamellen gehören - selektiv radial auszufahren, ist in bevorzugter Ausgestaltung der Erfindung vorgesehen, daß jeweils eine Lamelle oder mehrere nebeneinander angeordnete Lamellen einen Verschiebeantrieb haben, welcher unabhängig vom Verschiebeantrieb der anderen Lamellen betätigbar ist. Er besteht vorzugsweise aus einer Vielzahl von über den Umfang verteilten, sich parallel zu den Lamellen erstreckenden, in Längsrichtung anzutreibenden Schub- oder Zugstäben, welche mittelbar oder unmittelbar radial auf die Lamellen einwirken. Dies kann z. B. in der Weise geschehen, daß die Schub- oder Zugstäbe über wenigstens eine radial äußere Keilfläche radial gegen eine mit ihr zusammenwirkende Gegenfläche an einer oder mehreren Lamellen drücken. Für die Rückstellung in die radial nach innen zurückgezogene Ausgangsstellung können Federn sorgen, die sich vorzugsweise an dem in den Stator oder Rotor einfahrbaren, vorderen Ende der Lamellen axial erstrecken und über Schrägflächen radial auf die Lamellen einwirken. Auf diese Weise bringt man die Rückstellfedern innerhalb des Umfangs der Statorbohrung unter. Weil dies am hinteren Ende der Lamellen nicht notwendig ist, können dort die Rückstellfedern auch mit radialer Ausrichtung angeordnet sein.

Um die Lamellen während ihrer radialen Bewegung zu führen, sind sie radial innen in sich in Längsrichtung erstreckenden Führungsnuten in den Keilflächen gehalten und sitzen radial außen in Spalten zwischen Führungsstäben. Darüber hinaus können die Lamellen an ihren axialen Enden geführt werden.

Trotz selektiver Auswahl und getrennter Verschiebeantriebe jeweils für eine einzelne Lamelle oder wenige benachbarte Lamellen wird in weiterer bevorzugter Ausgestaltung der Erfindung vorgeschlagen, daß die getrennten Verschiebeantriebe ein gemeinsames Antriebsorgan haben, welches über einzeln steuerbare Kupplungsorgane selektiv mit unterschiedlichen Gruppen von Zug- oder Schubstäben kuppelbar ist. Es bereitet keine Schwierigkeiten, mal diese und mal jene Gruppe von Kupplungsorganen anzusteuern, wobei zu verschiedenen Gruppen teilweise dieselben Kupplungsorgane gehören können. Diese sind vorzugsweise mit dem gemeinsamen Antriebsorgan verbunden und jeweils einzeln formschlüssig mit jeweils einem Zug- oder Schubstab in Eingriff zu bringen.

Um auch den axial aus den Statornuten herausragenden Teil der Spulen, die sog. Wicklungsköpfe, formen zu können, ist in Weiterbildung der Erfindung vorgesehen, daß konzentrisch zur Mittellängsachse relativ zueinander axial verschiebbare Formringe vorhanden sind, welche mit Schlitzen versehen sind, durch die sich die Lamellen erstrecken. Zweckmäßigerweise haben die beiden Formringe einen Antrieb, der unabhängig vom Verschiebeantrieb der Lamellen betätigbar ist, so daß wahlweise die jeweils gewünschten Lamellen radial ausgefahren und/oder die Formringe bis auf ein bestimmtes Endmaß axial an das Statorblechpaket herangefahren werden können.

Insgesamt bietet die neue Formvorrichtung die Möglichkeit zum Zwischenformen der in bestimmten Nuten liegenden Spulen, um in dieselben Nuten noch die Spulen einer weiteren Wicklung einzuziehen, zum Freiformen, um z. B. bei Drehstrommotoren die in bestimmte Nuten eingezogenen Nuten der zuvor eingezogenen Lagen radial nach außen zurückzudrängen, um in andere Nuten eine weitere Spulenlage einzuziehen, und zum Endformen, um der Gesamtheit der eingezogenen Spulen einschließlich der Wicklungsköpfe die endgültige Form zu geben.

Ein Ausführungsbeispiel der Erfindung wird nachstehend anhand der Zeichnung näher erläutert. Es zeigen:
- Fig. 1: einen vereinfachten Längsschnitt durch eine Formvorrichtung;
- Fig. 2: einen Teil-Querschnitt der Vorrichtung nach Fig. 1.

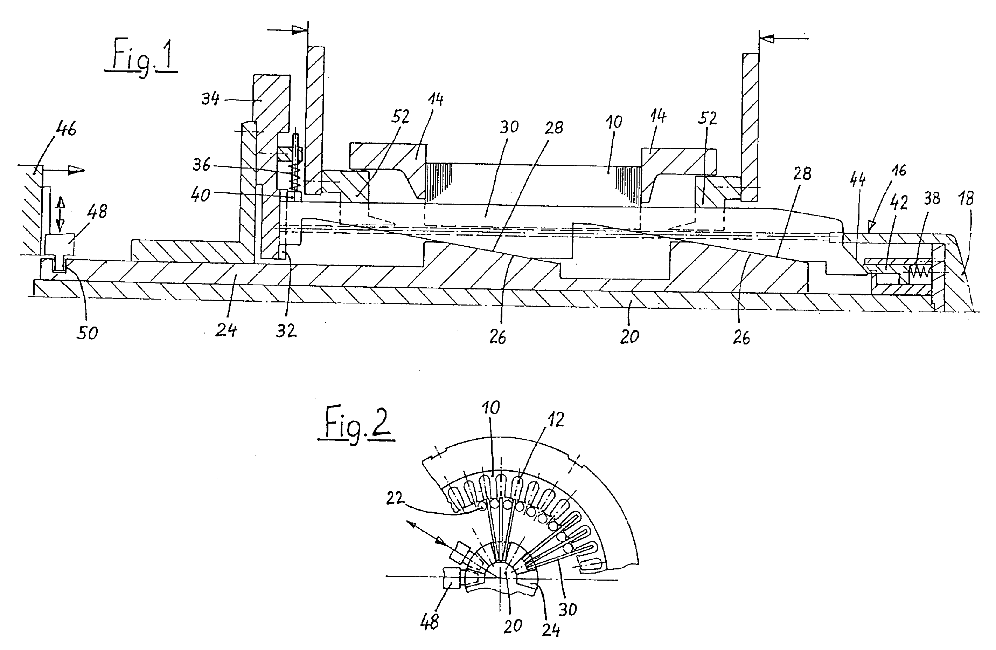

In der gezeigten Formvorrichtung ist ein Statorblechpaket 10 mit radial innen offenen Nuten 12 (siehe Fig.2) in einer Halterung 14 eingespannt. Durch axiale Relativbewegung läßt sich ein insgesamt mit 16 bezeichneter Formdorn in die Statorbohrung einfahren. Der Formdorn 16 hat ein konisches vorderes Ende 18, mit welchem er bei der Einfahrbewegung in den Querschnitt der Statorbohrung vorstehende Spulenteile radial nach außen zurückdrängt. Im übrigen hat der Formdorn ein Traggerüst, welches im wesentlichen aus einer Mittelachse 20, die im Beispielsfall einen runden Querschnitt hat, und einem Kranz äusserer Führungsstäbe 22 (siehe Fig. 2) besteht.

Auf der Mittelachse 20 sind zwölf Schubstäbe 24 in gleichmässiger Verteilung über den Umfang axial verschieblich geführt. Jeder Schubstab 24 hat einen aus Fig. 2 ersichtlichen sektorförmigen Querschnitt und mit axialem Zwischenabstand radial außen zwei Keilflächen 26, die sich zum vorderen Ende des Formdorns 16 hin verjüngen. Mit ihren radial inneren geraden Flächen liegen die Schubstäbe 24 an der runden Mittelachse 20 an. Alternativ könnte letztere bei zwölf Schubstäben 24 auch einen zwölfeckigen Querschnitt haben oder die radial innere Fläche der Schubstäbe 24 entsprechend dem Durchmesser der Mittelachse 20 gerundet sein, falls die Flächenpressung dies erfordert.

An den Keilflächen 26 jedes Schubstabs 24 liegen mit entsprechenden keilförmigen Gegenflächen 28 jeweils drei in Umfangsrichtung benachbarte und jeweils radial ausgerichtete Lamellen 30 an. Jede Lamelle 30 ist radial außen in einem passenden Spalt zwischen zwei Führungsstäben 22 radial verschieblich geführt. Um die Lamellen 30 auch radial innen zu führen, sind die Keilflächen 26 mit nicht gezeigten axialen Längsnuten versehen, in welche die Lamellen 30 passend eingreifen. Darüber hinaus sind diese an ihrem hinteren Ende in sich radial erstreckenden Führungsnuten 32 in einem Gehäuseteil 34 des Führungsdorns 16 geführt.

Durch axiale Bewegung eines Schubstabs 24 relativ zur Mittelachse 20 nach vorn werden die drei zugeordneten Lamellen 30 infolge der zusammenwirkenden Keilflächen 26, 28 radial nach außen gedrückt. Um sie beim Rückzug des Schubstabs 24 wieder radial nach innen zurückzustellen, sind am hinteren Ende radial ausgerichtete Federn 36 und am vorderen Ende axial ausgerichtete Federn 38 vorgesehen. Jede Feder 36 ist radial außen an einem mit dem Gehäuseteil 34 verbundenen Federlager abgestützt und drückt über ein Segmentstück 40 radial außen auf drei benachbarte Lamellen 30. Jede Feder 38 ist am vorderen Gehäuseteil des Führungsdorns 16 abgestützt und drückt über ein darin axial verschieblich geführtes Segmentstück 42 mit hinterer Kegelfläche, die sich nach vorn verjüngt, auf mit dieser zusammenwirkende vordere Keilflächen 44 an drei benachbarten Lamellen 30.

Zur Baueinheit des Führungsdorns 16 gehört ein relativ zur Mittelachse 20 axial vorschiebbares und zurückziehbares Antriebsorgan 46, welches im wesentlichen die Form eines Ringes hat. Als Bewegungsantrieb kann z. B. ein Hydraulikzylinder dienen. An dem Antriebsorgan 46 sind im Beispielsfall in gleichmäßiger Verteilung über den Umfang zwölf jeweils radial ausgerichtete Pneumatikzylinder und durch diese radial verschiebliche Kupplungsorgane 48 gelagert, deren jedes durch Betätigung des Pneumatikzylinders zwischen einer radial nach außen zurückgezogenen Neutralstellung und einer radial nach innen vorgeschobenen Mitnahmestellung bewegbar ist, in welcher es formschlüssig in eine Nut oder Bohrung 50 in einem Schubstab 24 eingreift. Die Pneumatikzylinder der Kupplungsorgane 48 lassen sich einzeln und in beliebig gebildeten Gruppen ansteuern, so daß mittels des gemeinsamen Antriebsorgans 46 jede beliebige Gruppe von Schubstäben 24 zum vorderen Ende des Führungsdorns 16 hin vorgeschoben und dadurch die entsprechende Gruppe von Lamellen 30 radial ausgefahren werden kann.

Zu der Formvorrichtung gehört weiterhin eine Einrichtung zum Formen der axial über das Statorblechpaket 10 vorstehenden Wicklungsköpfe der Spulen. Sie besteht aus zwei axial verschieblich geführten Formringen 52, welche mittels konischer oder ringförmig sphärischer Flächen die Wicklungsköpfe radial nach außen und gegen die Stirnflächen des Statorblechpakets 10 drücken. Die Formringe 52 lassen sich jeweils bis auf einen vorbestimmten Zwischenabstand an die Stirnflächen des Statorblechpakets 10 heranfahren.

Es versteht sich, daß die Antriebs- und Führungsorgane der Lamellen 30 auch anders als gezeigt und vorstehend beschrieben ausgeführt werden können. So könnten z. B. die Schubstäbe 24 und die Lamellen 30 auch über Parallellenker miteinander verbunden sein, oder es könnten Führungsstifte an den Lamellen oder den Schubstäben 24 in schräge Führungsnuten am jeweils anderen Teil eingreifen. Die Anzahl der Lamellen 30, die jeweils von einem Schubstab 24 betätigt werden, hängt ebenso wie die Anzahl der Schubstäbe 24 von der Größe des Statorblechpakets, d. h. dem zur Verfügung stehenden Raum, sowie davon ab, welche unterschiedlichen Wickelschemata vorkommen, die jeweils unterschiedliche Gruppen von radial ausfahrbaren Lamellen erfordern.

Statt des Schubantriebs zum Ausfahren der Lamellen 30 könnte auch ein Zugantrieb vorgesehen werden. Eine weitere Alternative besteht darin, anstelle eines einzigen Antriebsorgans 46 und einzeln oder in Gruppen ansteuerbaren Kupplungsorganen 48 einzelne Antriebsorgane für jeden Schubstab 24 zu wählen, die einzeln bzw. selektiv in unterschiedlichen Gruppen angesteuert werden können. Die Länge des radialen Verschiebewegs der Lamellen 30 läßt sich durch eine entsprechende Steuerung des axialen Verfahrwegs des Antriebsorgans 46 vorausbestimmen und verändern. Somit besteht auch die Möglichkeit, bei der Bearbeitung eines bestimmten Statorblechpakets zunächst mit einer ersten Gruppe von Lamellen 30 eine bestimmte Weglänge radial in eine erste Gruppe von Nuten einzufahren und später mit einer anderen Gruppe von Lamellen 30 in die zugeordneten Nuten mit einer anderen radialen Weglänge einzudringen.

Die Formringe 52 sind unabhängig von den Lamellen 30 betätigbar. Je nach gewünschter Formung können sie daher wahlweise in demselben Arbeitsgang wie die Lamellen 30 betätigt werden oder auch in einem separaten Arbeitsgang einzeln, um z. B. am Ende des Fertigungsvorgangs nur noch die Wicklungsköpfe in eine bestimmt Form zu bringen. Wie aus Fig. 1 ersichtlich, müssen sich die Formringe 52 und die Lamellen 30 durchdringen. Zu diesem Zweck haben die Formringe 52 axial durchgehende Schlitze, durch welche sich die Lamellen 30 erstrecken.

Bei dem gezeigten Ausführungsbeispiel grenzen die Schubstäbe 24 unmittelbar aneinander. Infolge der Berührung nehmen die bei einem bestimmten Arbeitsgang axial vorgeschobenen Schubstäbe 24 die benachbarten Schubstäbe einen Teil des Weges mit. Dies stört jedoch nicht, weil das Mitschleppen aufhört, sobald die von den mitgeschleppten Schubstäbe 24 radial auswärts bewegten Lamellen 30 auf Widerstand stoßen. Um die mitgeschleppten Schubstäbe 24 wieder in die Ausgangsstellung zurückzuziehen, ist vorgesehen, daß in der vorgeschobenen Stellung des Antriebsorgans 46 sämtliche Kupplungsorgane 48 radial nach innen gegen die Schubstäbe 24 einfahren, so daß sie bei der Rückzugsbewegung des Antriebsorgans 46 in die Bohrungen oder Nuten 50 der mitgeschleppten Schubstäbe 24 einrasten und auch diese wieder in die Ausgangsstellung zurückziehen.

## Patentansprüche

1. Vorrichtung zum Formen von in radial innen offene Nuten eines Stator- oder Rotorblechpakets einer elektrischen Maschine eingezogenen Spulen, bestehend aus einer Halterung (14) zur Einspannung des Stator- oder Rotorblechpakets (10) und einem koaxial zu dessen Mittellängsachse angeordneten, in die Stator- oder Rotorbohrung einführbaren Formdorn (16) mit einer Vielzahl von radial in die Nuten (12) vorschiebbaren Lamellen (30), **dadurch gekennzeichnet**, daß selektiv mehrere unterschiedliche Gruppen von Lamellen (30) radial vorschiebbar sind.

2. Vorrichtung nach Anspruch 1, **dadurch gekennzeichnet**, daß jeweils eine Lamelle (30) oder mehrere nebeneinander angeordnete Lamellen (30) einen Verschiebeantrieb (24, 48) haben, welcher unabhängig vom Verschiebeantrieb (24, 48) der anderen Lamellen (30) betätigbar ist.

3. Vorrichtung nach Anspruch 2, **dadurch gekennzeichnet**, daß der Verschiebeantrieb der Lamellen (30) aus einer Vielzahl von über den Umfang verteilten, sich parallel zu den Lamellen (30) erstreckenden, in Längsrichtung antreibbaren Schub- oder Zugstäben (24) besteht, welche mittelbar oder unmittelbar radial auf die Lamellen (30) einwirken.

4. Vorrichtung nach Anspruch 3, **dadurch gekennzeichnet**, daß die Schub- oder Zugstäbe (24) über wenigstens eine radial äußere Keilfläche (26) radial gegen eine mit ihr zusammenwirkende Gegenfläche (28) einer oder mehrerer Lamellen (30) drücken.

5. Vorrichtung nach Anspruch 4, **dadurch gekennzeichnet**, daß auf die Lamellen (30) eine radial nach einwärts gerichtete Federkraft (36, 38) als Rückstellkraft wirkt.

6. Vorrichtung nach Anspruch 5, **dadurch gekennzeichnet**, daß an dem in das Stator- oder Rotorblechpaket (10) einfahrbaren, vorderen Ende der Lamellen (30) sich axial erstreckende Federn (38) angeordnet sind, welche über Schrägflächen (44) radial auf die Lamellen (30) einwirken.

7. Vorrichtung nach Anspruch 4, **dadurch gekennzeichnet**, daß die Lamellen (30) radial innen in sich in Längsrichtung erstreckenden Führungsnuten in den Keilflächen (26) und radial außen in Spalten zwischen Führungsstäben (22) geführt sind.

8. Vorrichtung nach Anspruch 3, **dadurch gekennzeichnet**, daß die Schub- oder Zugstäbe (24) durch ein gemeinsames Antriebsorgan (46) verschiebbar sind, welches über einzeln steuerbare Kupplungsorgane (48) selektiv mit den Schub- oder Zugstäben (24) kuppelbar ist.

9. Vorrichtung nach Anspruch 8, **dadurch gekennzeichnet**, daß die Kupplungsorgane (48) mit dem gemeinsamen Antriebsorgan (46) verbunden und einzeln formschlüssig mit jeweils einem Schub- oder Zugstab (24) in Eingriff zu bringen sind.

10. Vorrichtung nach Anspruch 1, **dadurch gekennzeichnet**, daß konzentrisch zur Mittellängsachse relativ zueinander axial verschiebbare Formringe (52) vorhanden sind, durch welche die axial aus dem Stator- oder Rotorblechpaket (10) vorstehenden Wicklungsköpfe formbar sind, wobei sich die Lamellen (30) durch Schlitze in den Formringen (52) erstrecken.

## Claims

1. An apparatus for forming coils drawn into radially inwardly open slots of a laminated stack of a stator or rotor of an electric machine, comprising a mounting (14) for clamping the laminated stack (10) of the stator or rotor and a forming mandrel (16) which is arranged coaxially to the central longitudinal axis thereof and which can be introduced into the stator or rotor bore, said forming mandrel having a plurality of blades (30) which can be advanced radially into the slots (12), characterised in that selectively a plurality of different groups of blades (30) can be advanced radially.

2. An apparatus according to Claim 1, characterised in that in each case one blade (30) or a plurality of blades (30) arranged side by side have a traversing drive (24, 28) which can be operated independently of the traversing drive (24, 28) of the other blades (30).

3. An apparatus according to Claim 2, characterised in that the traversing drive of the blades (30) comprises a plurality of push or pull rods (24) which are distributed around the periphery, extend in parallel to the blades (30), can be driven in the longitudinal direction and act indirectly or directly radially on the blades (30).

4. An apparatus according to Claim 3, characterised in that the push or pull rods (24) press radially, via at least one radially outer wedge surface (26), against a countersurface (28) of one or more blades (30) cooperating with said wedge surface.

5. An apparatus according to Claim 4, characterised in that a radially inwardly directed elastic force (36, 38) acts as a restoring force on the blades (30).

6. An apparatus according to Claim 5, characterised in that at the front end of the blades (30), which can be inserted into the laminated stack (10) of the stator or rotor, axially extending springs (38) are provided which act radially on the blades (30) via inclined surfaces (44).

7. An apparatus according to Claim 4, characterised in that the blades (30) are guided radially inwardly in longitudinally extending guide grooves in the wedge surfaces (26) and radially outwardly in gaps between guide rods (22).

8. An apparatus according to Claim 3, characterised in that the push or pull rods (24) can be displaced by a common drive member (46) which can be selectively coupled with the push or pull rods (24) via individually controllable coupling members (48).

9. An apparatus according to Claim 8, characterised in that the coupling members (48) are connected with the common drive member (46) and are brought individually and in form-locking manner into engagement with a respective push or pull rod (24).

10. An apparatus according to Claim 1, characterised in that forming rings (52), which are axially displaceable relative to one another, are provided concentric to the central longitudinal axis, and through which the winding heads protruding axially from the laminated stack (10) of the stator or rotor can be formed, the blades (30) extending through slots in the forming rings (52).

## Revendications

1. Dispositif pour former des bobines placées dans les rainures ouvertes radialement vers l'intérieur, d'un paquet de tôles d'un stator ou d'un rotor d'une machine électrique, dispositif composé d'une fixation (14) pour serrer le paquet de tôles (10) du stator ou du rotor et d'une broche de formage (16) coaxiale à l'axe longitudinal du paquet et qui peut être introduite dans le perçage du stator ou du rotor, cette broche ayant un grand nombre de lamelles (30) qui peuvent avancer radialement dans les rainures (12), dispositif caractérisé en ce que plusieurs groupes différents de lamelles (30) peuvent être avancés radialement de manière sélective.

2. Dispositif selon la revendication 1, caractérisé en ce qu'une lamelle (30) ou plusieurs lamelles (30) juxtaposées possèdent chaque fois un entraînement de translation (24, 48) qui peut être actionné indépendamment de l'entraînement de translation (24, 48) des autres lamelles (30).

3. Dispositif selon la revendication 2, caractérisé en ce que l'entraînement de translation des lamelles (30) se compose de plusieurs tiges de poussée ou de traction (24) réparties à la périphérie et qui s'étendent parallèlement aux lamelles (30) en étant susceptibles d'être entraînées dans la direction longitudinale, et ces tiges agissent directement ou indirectement, de manière radiale sur les lamelles (30).

4. Dispositif selon la revendication 3, caractérisé en ce que les tiges de poussée ou de traction (24) poussent par au moins une surface extérieure en forme de coin, (26), radiale, contre une surface antagoniste (28) coopérant avec cette surface en forme de coin et appartenant à une ou plusieurs lamelles (30).

5. Dispositif selon la revendication 4, caractérisé en ce que les lamelles (30) sont soumises à une force de rappel exercée par une force de ressort (36, 38) dirigée radialement vers l'intérieur.

6. Dispositif selon la revendication 5, caractérisé en ce que l'extrémité avant des lamelles (30) qui peut pénétrer dans le paquet de tôles (10) du stator ou du rotor comporte des ressorts (38) s'étendant axialement et agissant radialement sur les lamelles (30) par les surfaces inclinées (44).

7. Dispositif selon la revendication 4, caractérisée en ce que les lamelles (30) sont guidées radialement vers l'intérieur dans des rainures de guidage s'étendant dans la direction longitudinale dans les surfaces en forme des coins (26) et radialement vers l'extérieur dans des intervalles entre des tiges de guidage (22).

8. Dispositif selon la revendication 3, caractérisé en ce que les tiges de poussée ou de traction (24) sont commandées par un organe d'entraînement (46) commun qui peut être couplé par des organes d'accouplement (48) susceptibles d'être commandés séparément, sélectivement, aux tiges de poussée ou de traction (24).

9. Dispositif selon la revendication 8, caractérisé en ce que les organes de couplage (48) sont reliés à un organe d'entraînement (46) commun et peuvent être mis en prise, séparément, par une liaison de forme avec chaque fois une tige de poussée ou de traction (24).

10. Dispositif selon la revendication 1, caractérisé en ce que concentriquement à l'axe longitudinal central, se trouvent des anneaux de forme (52) coulissant axialement de façon relative, par lesquels les têtes d'enroulement en saillie axialement du paquet de tôles de stator ou de rotor (10) peuvent être mises en forme, les lamelles (30) passant par les fentes des anneaux de forme (52).
